# EUROPÄISCHE PATENTANMELDUNG

(11) **EP 1 244 191 A2**
(43) Veröffentlichungstag der Anmeldung: **25.09.2002**
(21) Anmeldenummer: 02005981.2
(22) Anmeldetag: 15.03.2002
(51) Int. Cl.: H02J 7/14

(54) **Kraftfahrzeug mit zwei Bordnetzen**

(30) Priorität: 23.03.2001 DE 10114676; 28.02.2002 DE 10208981
(71) Anmelder: Leiber, Heinz, 71739 Oberriexingen (DE)
(72) Erfinder: Leiber, Heinz, 71739 Oberriexingen (DE)
(74) Vertreter: Lenzing, Andreas, Dr.

(57) **Zusammenfassung**

Es wird ein Kraftfahrzeug mit zwei Bordnetzen und zwei Batterien unterschiedlicher Spannungsstärke beschrieben.

Es werden zwei intelligente Stromverteiler mit Powermanagement für die verschiedenen Verbraucher vorgesehen.

## Beschreibung

Es ist in der Zukunft daran gedacht ein Fahrzeug mit zwei Bordnetzen und entsprechend zwei Batterien auszurüsten, von denen das eine 42V und das andere 14V Betriebsspannung und entsprechend 36V und 12V Batteriespannung aufweist (siehe z. B. VDI-Berichte Nr. 1547,2000 S. 477ff).

Der Erfindung liegt die Aufgabe zugrunde den zwei Bordnetzen zwei intelligente Stromverteiler zuzuordnen.

Diese Aufgabe wird durch die Merkmale des Anspruchs 1 gelöst.

Die Unteransprüche beinhalten Weiterbildungen und Ausgestaltungen der Erfindung. Weitere Vorteile ergeben sich aus der weiteren Beschreibung.

Der Erfindung liegen folgende Überlegungen und Erkenntnisse zugrunde.

In Zukunft werden Überwachungseinrichtungen für den Ladezustand (SOC) und/oder den Batteriezustand (SOH) eingeführt werden. Die Einrichtungen haben den Vorteil durch entsprechendes Powermanagement bei einer zu niedrig geladenen Batterie durch entsprechende Eingriffe beide Batterien wieder zu laden. Dies ist notwendig für kommende elektrische oder hydraulische Bremssysteme oder die elektrische Lenkung, deren Funktion vom Batterieladezustand abhängig ist.

Das erwähnte Powermanagement hat folgende Aufgaben:
- die Batterien auf SOH und SOC zu überwachen und den Generator entsprechend zur Stromversorgung zu steuern.
- die Konverter bedarfsabhängig zu schalten.

Ein Mangel der heutigen Sicherungskästen, die die Stromverteilung und Absicherung der Leitungsstränge übernehmen, ist die Absicherung nur nach absolutem Kurzschluß. Ein Teilkurzschluß, der oft zu Schwelbränden führt, wird nicht erfaßt. Auch hier eine Verbesserung zu erreichen, ist Aufgabe der Erfindung.

Die Sicherungskästen nehmen viel Raum in Anspruch. Die Anzahl der Sicherungen verteilt auf mehrere Sicherungskästen beträgt im Mittel über 50. Bei Ausfall einer Sicherung tut sich der Fahrer schwer, diese auszuwechseln ohne umfangreiches Studium der Bedienungsanleitung. Ideal ist ein Stromverteiler ohne auswechselbare Sicherungen.

Zweispannungsbordnetze werden bei der Erfindung von einem Generator versorgt, der die höhere Spannung liefert. Das Netz niedriger Spannung wird über einen DC/DC Konverter versorgt. Wichtig hierbei ist die richtige Portionierung und Ansteuerung über ein Powermanagement.

Ein wichtiger Gesichtspunkt ist der Fremdstart bei leeren Batterien über eine externe Spannungsquelle. Hierbei kann eine Verpolung auftreten, die im Bordnetz ohne viel Aufwand beherrscht werden sollte. Bei Einführung eines Zweispannungsbordnetzes ist nur ein Anschluß an 12V praktikabel, da die Infrastruktur für 42V nur langsam entstehen wird. Anstelle des Zweispannungsbordnetzes wird auch ein Einspannungsbordnetz mit 42V diskutiert. Das Zweispannungsbordnetz hat folgende Vorteile:
- eine 12V-Batterie ist kostengünstiger, kleiner und geringer im Gewicht als eine 36V-Batterie bei gleicher Speicherkapazität
- viele Steuergeräte, wie Kombiinstrumente, Airbag, Displays benötigen 12V oder weniger. Nur ca. 10% der Verbraucher sind prädestiniert für 42V.
- Motoren mit geringer Leistung < 5W sind für 42V in der Wickeltechnik zu aufwendig oder nicht darstellbar.
- Glühlampen benötigen Spannungen < 12V.
- DC-Konverter 42/12V für Steuergeräte mit relativ geringer Leistung sind aufwendig.
- Die Infrastruktur im Service und bei Fahrzeugherstellern ist auf 12V eingestellt, nämlich bei
- den Prüfgeräten in der Endmontage
- den Servicegeräten und für den
- Fremdstart und
- die Umstellung erfordert einen langen Zeitraum
- die 42V-Technik ist für Relais aufwendiger, die 12V-Relais haben sich in Kosten und Zuverlässigkeit etabliert
- die 42V-Technik erfordert wegen Lichtbogenbildung bei Steckern, Schaltern und Relais spezielle Maßnahmen
- die elektrische Bremse, brake by wire, erfordert 2 Batterien und 12V für leistungsschwächere Hinterachsbremse (ggf. 12V-Versorung nur bei Ausfall der 36V-Batterie.

Anhand der Ausführungsbeispiele der Zeichnung wird die Erfindung näher erläutert.

Es zeigen:
- Fig. 1:: zwei Stromverteiler für die beiden Bordnetze
- Fig. 2:: eine alternative Ausbildung des Niedrigvolt-Strom-Verteilers.
- Fig. 3:: ein Ausführungsbeispiel für die Strukturierung der beiden Bordnetze
- Fig. 4:: ein gegenüber Fig. 1 geändertes Ausführungsbeispiel

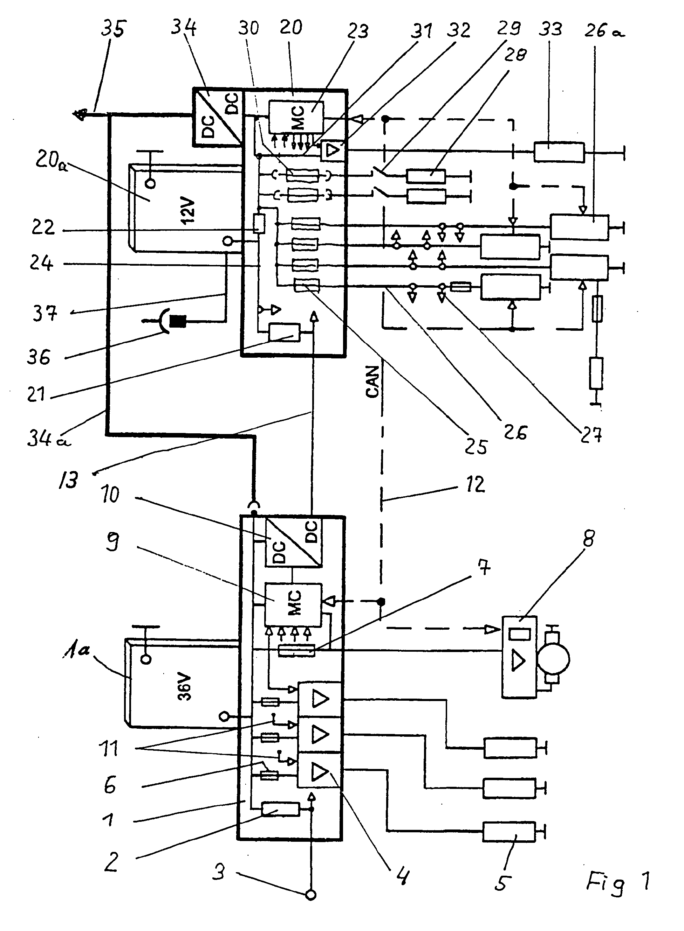

In Fig. 1 ist ein erster Stromverteiler 1 für hohe Spannung (42/36V) und ein zweiter Stromverteiler 20 für niedrige Spannung 14/12V dargestellt. Beide Verteiler 1 und 20 sind direkt an ihre 36V-, bzw. 12V-Batterie 1a, bzw. 20a angebaut, wodurch ein Kurzschluß zwischen Batterie und Stromverteiler ausgeschlossen ist. An der Klemme 3 des ersten Stromverteilers 1 ist der 42V-Generator angeschlossen. Im Stromverteiler 1 wird der Eingangsstrom über einen Shunt 2 zur Messung des Eingangsstromes geführt. Die Eingangsleitung führt zu mehreren Endverstärkern 4 über die Verbraucher 5 versorgt werden. Außerdem führt sie zu einer Sicherung 7 und weiter zu einem Steuergerät 8, z. B. für die elektrische Servolenkung. Weiterhin ist die Eingangsleitung mit einem Microcomputer (MC) 9 verbunden und schließlich noch mit einem Eingang eines Spannungskonverters, 10, der am Ausgang 14V abgibt.

Die Endstufen und der Strompfad zum Steuergerät 8 können beliebig erweitert sein. Bei den Endverstärkern 4 ist je ein integrierter Widerstand zugrunde gelegt; über diesen und über der Sicherung 7 und über dem Shunt 2 werden die jeweiligen Ströme gemessen und dem MC9 mitgeteilt, was durch die Pfeile 11 angedeutet ist. Im Stromverteiler 1 wird somit der Eingangsstrom (über Shunt2) und die Ausgangsströme (über Sicherung 7 und Endstufen 4) gemessen und dem Powermanagement MC9 mitgeteilt. Die ansteuerbaren Endstufen 4, z.B. Mosfeds stellen zugleich eine elektronische Sicherung dar. Hier kann durch die Strommessung auch ein Teilkurzschluß erkannt werden, wenn der Nennstrom überschritten wird. Die Endstufe wird dann vom MC 9 gesperrt. Man sieht trotz der Sicherungswirkung der Endstufen Sicherungen 6 im Strompfad vor, um bei dem seltenen Fall eines Kurzschlusses und des gleichzeitigen Durchlegierens der Endstufe, einem Brand vorzubeugen. Man kann hier jedoch eine nicht auswechselbare Schmelzsicherung oder eine regenerierbare Sicherung (z. B. Polyswitch) verwenden. Den Stromverteiler 1 samt Batterie 1a wird man vorzugsweise im Motorraum unterbringen, da dort ja auch die Verbraucher hoher Leistung untergebracht sind, die vorzugsweise mit 42V betrieben werden (wie z. B. Motorgebläse, Innenluftgebläse, Frontscheibenwischer, evt. Frontscheibenheizung, ABS-Motor). Der Strompfad mit der Sicherung 7 ist typisch für die Versorgung eines externen Steuergeräts 8 mit hoher Leistung, wie z. B. die elektrische Servolenkung. Die Aufgabe der Sicherung 7 ist, einen seltenen Kurzschluß in der Verbindungsleitung, z. B. bei einem Crash abzusichern. Daher muss diese nicht auswechselbar realisiert werden.

Der MC 9 ist mit den externen Steuergeräten, z.B. 8, z.B. mittels eines Datenbus 12, z.B. Can verbunden und erhält alle Informationen über die extern geschalteten Verbraucher und den 12V-Stromverteiler 20 und kann umgekehrt dort eingreifen.

Der Spannungskonverter 10 versorgt den Verteiler 20 über eine Leitung 13.

Am Eingang und Ausgang des Stromverteilers 20, nämlich an einem Shunt 21 und hinter dem Anschluß der Batterie 20a am Shunt 22 wird der Eingangs- und Ausgangsstrom der Batterie und des Verteilers gemessen und einem zweiten MC 23 mitgeteilt, der seinerseits mit dem MC9 über den Datenbus korrespondiert. Entsprechend wird durch Steuerung des Spannungskonverters 10 der Ein- und Ausgangsstrom im Gleichgewicht gehalten, wobei Stromspitzen von der Batterie abgedeckt werden.

Die beiden MC 9 und 23 stellen gleichzeitig eine gegenseitige Redundanz dar, das heißt jeder kann bei Ausfall des andern MC das Management übernehmen, sofern nicht ein Totalausfall des MC vorliegt.

Der Stromverteiler ist in der Baugröße klein und ist mit vielen Funktionen ausgestattet und kann daher als intelligenter Stromverteiler bezeichnet werden.

Der 12V-Stromverteiler 20 hat, wie gesagt, am Eingang ebenfalls einen Shunt 21, dessen Ein- und Ausgang mit dem MC 23 verbunden sind. Die 12V-Stromversorgung geht zunächst zur 12V-Batterie 20a. Die weiterführende Stromleitung 24 geht wieder über einen Shunt 22, so dass Ein- und Ausgangsstrom im 12V-Stromverteiler 20 gemessen werden können. Kurzzeitige Belastungen, die der Gleichstromkonverter 10 nicht abdeckt, können somit vom Powermanagement erfasst werden. Als Alternative zum Shunt sind auch strommessende Elemente, wie z. B. Hallelemente denkbar.

An die 12V-Stromversorgungsleitung 24 sind eine Reihe von Sicherungen 25 angeschlossen. Hier schließen sich Leitungsstränge 26 des 12V-Bordnetzes mit Steuergeräten 26a an, z. B. die Versorgung des Fahrzeugs links, des Fahrzeugs rechts, die 12V-Verbraucher des Motorraums, Sicherheitssysteme, Kofferraum, Motor und Getriebe. Die Sicherungen können auch hier regenerierbare Sicherungen sein.

Die eingezeichneten Abzweigungen 27 führen zu weiteren Verbrauchern. Diese an die Leitungsstränge 26 angeschalteten Steuergeräte 26a melden dem Powermanagement im MC 23 über den Datenbus 12 die Leistungen des angeschalteten Verbrauchers. Dieser wird dann wiederum im Powermanagement verglichen mit dem gemessenen Strom am Shunt 22.

An die 12V-Leitung 24 sind auch Verbraucher 28 angeschaltet, die über Schalter 29 betrieben werden. Dies sind z. B. Zigarrenanzünder und dgl. Hier lohnt sich kein Busknoten, wie er bei den Steuergeräten vorgesehen ist. Über eine hier im Strompfad eingebaute Sicherung 30 kann der Strom gemessen werden und dem MC 23 gemeldet werden. Über einen weiteren Strompfad 31 kann Alternativ zu den Endstufen 4 im 42V-Stromverteiler 1 eine Endstufe 32 zum Schalten von Verbrauchern 33 eingesetzt werden. Wegen des kleineren Stromes wird hier auf eine Absicherung verzichtet.

Die Leitung 24 führt zum MC 23 und zu einem Gleichstromkonverter 34. Dieser setzt die Spannung auf 42V herauf zum Laden der 36V-Batterie 1a oder eines startrelevanten Energiespeichers über die Leitung 34a, wenn ein 42V-Starter vorgesehen ist. Wird ein Schwungradstarter mit 12V Betriebsspannung verwendet, wird die Motorsteuerung mit 42V über die Leitung 35 versorgt.

Der Fremdstartstützpunkt 36 ist mit dem 12V-Kreis und dem Pulswechselrichter des Schwungradstarters verbunden.

Auch beim 12V-Stromverteiler 20 gilt, dass das gesamte Bordnetz in der Strom- und auch Spannungsbilanz überwacht wird. Damit können vom Powermanagement in einfacher Weise die Zustände SOC und SOH der Batterien erfasst werden.

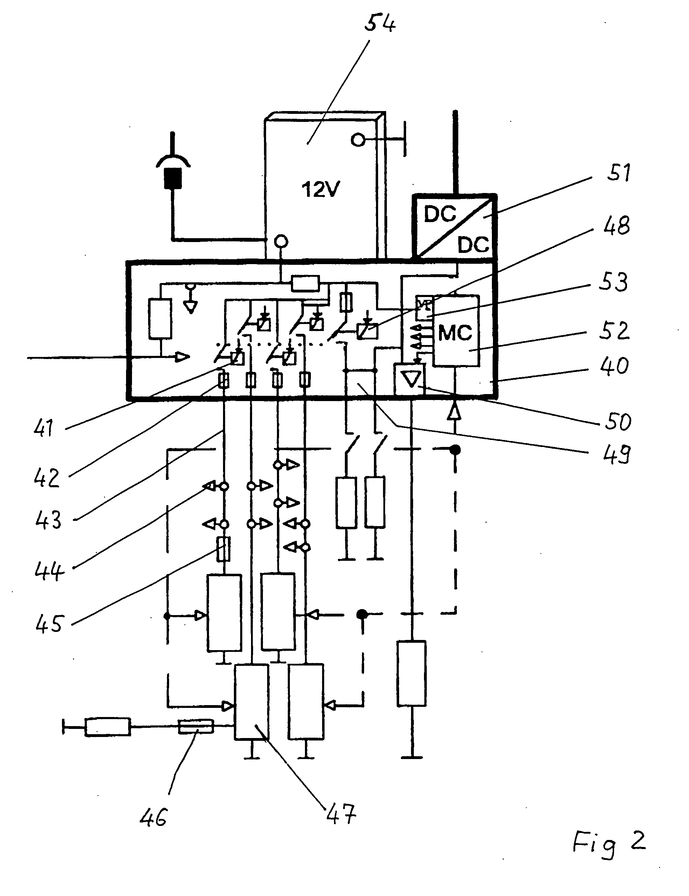

Fig. 2 zeigt eine Alternative zum 12V-Stromverteiler 20. Der Unterschied liegt lediglich darin, dass in diesem 12V-Stromverteiler 40 Relais 41 mit Sicherungen 42 in den, den Leitungssträngen 16 der Fig. 1 entsprechenden Leitungssträngen 43 verwendet werden. Deren Schalter werden im Falle eines Kurzschlusses geöffnet. Der Vorteil liegt darin, dass im Kurzschlußfall die Sicherungen 42 nicht ausgewechselt werden müssen. Hier sind ähnlich wie beim 42V-Stromverteiler 1 nicht auswechselbare Sicherung 42 für den unwahrscheinlichen Fall des Relaisklebens im Kurzschlußfall vorgesehen. Der Ausgangsstrom zu den Leitungssträngen 43 wird gemessen. Der große Vorteil der Relais 41 liegt aber im Verpolschutz für die nachgeschalteten Leitungsstränge 43, der beim Fremdstart nicht auszuschließen ist.

Außerdem hat das Relais den Vorteil, dass bei einem kurzzeitigen Kurzschluss der Leitungsstrang bald wieder betriebsfähig ist. Dadurch kann eine völlige Entleerung der Batterie und damit eine Startunfähigkeit vermieden werden.

Bei den Leitungssträngen 43 mit Verzweigungen 44 (entsprechend 10 in Fig. 1) ist es auch denkbar in den Kabelbaum regenerierbare Sicherungen vor oder nach dem Steuergeräten 47 einzubauen. Das hat den Vorteil, dass im Kurzschlußfall nicht der gesamte Strang sondern nur ein Zweig abgeschaltet werden kann Die Versorgung aller Ausgänge über Relais hat den Vorteil, dass der gesamte Verteiler verpolsicher ist, da die Relais vom MC nur angesteuert werden, wenn die richtige Polung vorliegt. Ein weiteres Relais 48 ist in einem Strompfad 49 mit Schaltern verwendet. Dieses Relais versorgt zusätzlich eine Endstufe 50 und einen Gleichspannungskonverter 51, die damit einen Verpolschutz haben.

Der MC 52 ist durch einen einfachen Verpolschutz 53 abgesichert.

Dieses Konzept für den Stromverteiler 40 ist dem Stromverteiler 20 der Fig. 2 überlegen und trotz der Relais 41 dem 42V-Verteiler ebenbürtig.

Mit diesem Stromverteiler ist weitestgehend das gesamte Bordnetz einschließlich der Batterie 54 überwachbar. Der Einbauraum ist kleiner als bei den heutigen Sicherungskästen und es wird erreicht, dass kein Fahrzeug mehr liegen bleibt, weil der Fahrer die Sicherung nicht wechseln kann. Das Powermanagement (MC) kann über ein Display im Fahrzeug einen kritischen Zustand im Bordnetz melden und dieser kann sogar über Telematic weiteren Diensten zugeleitet werden. Das Konzept kann z. B. im Crashfall außer den sicherheitsrelevanten Funktionen den Rest abschalten oder nur den kurzgeschlossenen Teil. Das Powermanagement erfasst auch den Generator, dessen Ausgangsstrom bedarfsabhängig gesteuert wird. Ein Teil der Relais mit den zugehörigen Verbrauchern kann als bistabile Ausführung ausgebildet werden. Dies hat den Vorteil, dass diese Verbraucher bei abgestelltem Fahrzeug in einer Zeitfunktion oder abhängig vom Ladezustand abgeschaltet werden können.

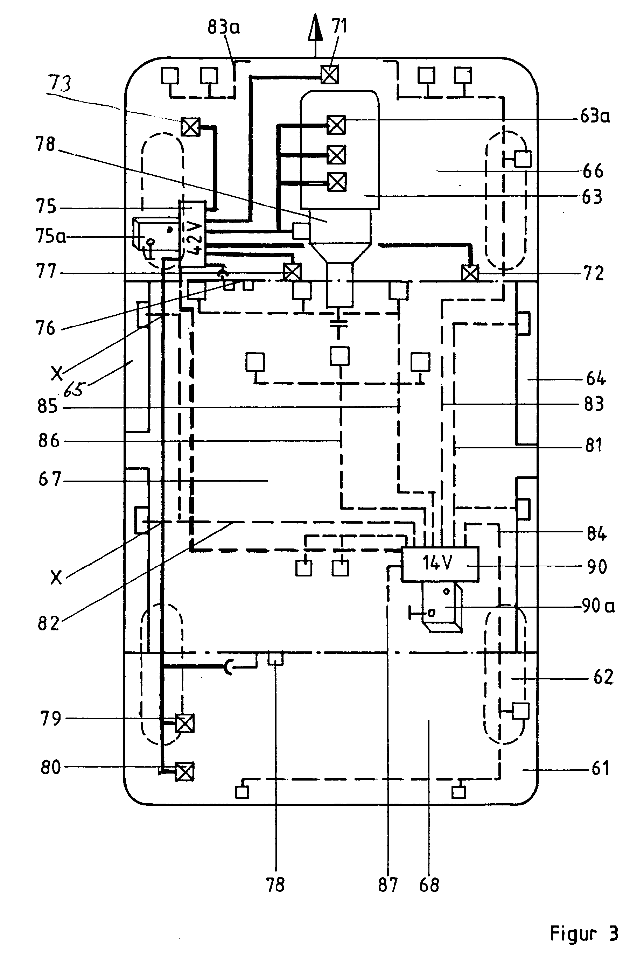

Anhand der Fig. 3 wird eine mögliche Strukturierung der beiden Bordnetze im Fahrzeug aufgezeigt.

In der Fig. 3 ist der Umriss 61 eines Fahrzeugs gezeigt, das Räder 62, einen Motor 63, Türen 64 und 65, einen Motorraum 66, einen Fahrzeuginnenraum 67 und einen Kofferraum 68 aufweist. Das gezeigte Fahrzeug weist ein 42V-Bordnetz mit einem Stromverteiler 75 und einer 36V-Batterie 75a auf. Die zugehörigen Verbindungsleitungen dieses Bordnetzes sind voll ausgezogen dargestellt. Das Fahrzeug weist auch ein 14V-Bordnetz auf, das einen Stromverteiler 90 mit einer Batterie 90a aufweist. Die zugehörigen Verbindungsleitungen einschließlich der 14V-Verbindungs-leitung zwischen dem Stromverteiler 75 und dem Stromverteiler 90, die zur Versorgung des zweiten Bordnetzes und zur Ladung der Batterie 90a dient, sind gestrichelt eingezeichnet. Zur Umsetzung der 42V des einen Bordnetzes auf die 14V des andern Bordnetzes dient ein im Stromverteiler 75 enthaltener Spannungsumsetzer. Stromverteiler 90 und die Batterie 90a sind im hinteren Teil des Fahrzeugs in der Zeichnung unter der Rückbank oder alternativ im Kofferraum 68, und somit in Längsrichtung gesehen, entfernt vom Verteiler 75 und gegenüber dem Verteiler 75 auf der anderen Wagenseite untergebracht.

Die Zeichnung zeigt eine Konzentration der 42V-Verbraucher im Motorraum 66 und in der Nähe davon, wie z. B. die Frontscheibe evt. mit Heizung 76 und Scheibenwischer 77. Die 42V-Verbraucher im Motorraum sind der Ventilatormotor 71, Innenraumlüftermotore 72, die Servolenkung 73, und der ABS-Motor 74. Dazu gehören auch die Motorsteuerung 63a, der Motor und die Kupplung des Klimakompressors und eine Luftpumpe. Im Motorraum ist auch ein im Motor integrierter Startermotor/Generator 78 untergebracht, wobei der Generator die Betriebsspannung liefert und die Batterie 75a lädt.

Ein Versorgungsstrang des 42V-Bordnetzes führt auch zum Kofferraum 68 und versorgt dort die Heckscheibenheizung 78, die Tankpumpe 79 und den Heckscheibenwischer 80.

Das auf der anderen Seite des Fahrzeugs 61 angeordnete 14V-Bordnetz versorgt Verbraucher mit geringerem Leistungsbedarf. Vom Stromverteiler 90 führt dort ein Versorgungsstrang 81 zu den rechten Fahrzeugtüren, ein weiterer Strang 83 zum rechten und weiter (Leitung 83a) zum linken vorderen Motorraum (Scheinwerfer, Scheinwerferscheibenwischer) und ein weiterer Strang 84 zum Kofferraum 68 mit den Heckleuchten und den Audio- oder Teiematikgeräten. Ein weiterer Versorgungsstrang 85 führt zum Cockpit, ein weiterer 86 zur Mittenkonsole und zu den Sitzen (Verstellung, Heizung) und einer 87 zum Dach (Schiebedachmotor, Innenraumleuchten usw. Nicht eingezeichnet ist ein Strang, der zu den Sicherheitssystemen führt. Dieser hat im Cockpitinnenraum und Kofferraum seine Anschlüsse.

Wichtig für die beschriebenen Strukturen sind die intelligenten Stromverteiler 75 und 90. Von diesen werden die gesamten Bordnetze auf Funktion und Stromverbrauch überwacht, wozu die Eingangs- , Ausgangs- und/oder Verbraucherströme gemessen und in einem MC zu Steuersignalen für die einzelnen Netzteile und Stränge verarbeitet werden. Auch der Ladezustand der Batterien 75a und 90a wird überwacht.

In der Zeichnung werden auch die linken Türen 65 von dem 12V-Bordnetz über einen Strang 82 versorgt. Hier kommt es zu den einzigen Kreuzungen x der 42V- und 12V-Leitungen. Hier werden besondere Maßnahmen zur Isolation der Netze gegeneinander vorgenommen. Um auch diese Kreuzungen x zu vermeiden, wird alternativ die Versorgung dieser Türen durch das 42V-Netz vorgeschlagen, was eine gewisse Redundanz bezüglich der Spannungsversorgung für die Türen bedeutet.

Die 42V-Versorgung der Türen macht allerdings die Elektronik aufwendiger, weil neben einem Hochstromverbraucher, nämlich dem Fensterhebermotor mit 150W, viele kleine Verbraucher, z. B. Motoren von Außenspiegel und im Türschloss und Leuchten versorgt werden müssen. Wegen der kleinen Leistung dieser Türschloss- und Außenspiegelmotore lassen diese sich nicht mit einer 42V-Wicklung ausführen. Es wird also ein 42/14V Spannungskonverter im Steuergerät für die Tür benötigt.

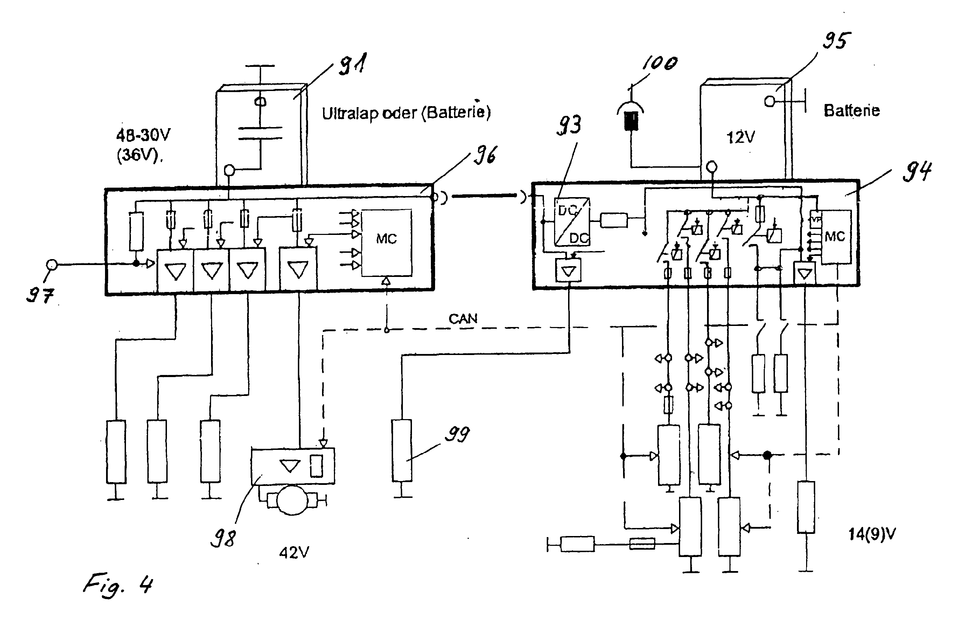

Anstelle der üblichen 36V-Batterie oder zusätzlich kann auch ein Energiespeicher, z. B. ein Ultra Cap vorgesehen sein, über den die Versorgung des Bordnetzes mit der höheren Spannung (42V) erfolgt. Auch für die Energiespeicher gilt der verwendete Ausdruck "Batterie". In der Fig. 4 ist dieser Energiespeicher mit 91 bezeichnet.

In der Fig. 1 sind zwei Spannungswandler 10 und 34 vorgesehen. Es ist wie in Fig. 4 gezeigt auch möglich nur einen bidirektionalen Spannungswandler 93 vorzusehen, der die Funktionen der beiden Spannungswandler übernimmt. Dieser wird vorzugsweise dem Stromverteiler 94 mit der niedrigeren Spannung zugeordnet. Er setzt also die Spannung der Niederspannungsbatterie 95 (12V) in die Versorgungsspannung des 42V-Bordnetzes (Stromverteiler 96) um. Diese Versorgung wird gebraucht und ist gegebenenfalls kurzzeitig überlastbar, wenn der integrierte Startergenerator (angeschlossen bei 97) z. B. bei seiner Verwendung als elektrischer Antrieb, z. B. bei Rekuperation keinen ausreichenden Strom ins 42V-Bordnetz liefert und im 42V-Bordnetz leistungsstarke Verbraucher, z. B. der Motor der Servolenkung (98) stärker beansprucht, z. B. bei einem Lenkmanöver, werden.

Mittels der intelligenten Stromverteiler 94 und 96 ist der Spannungskonverter 93 verpolgeschützt, was auch für die beiden Spannungskonverter der Fig. 1 gilt.

Wird der intelligente Stromverteiler 90 mit der niedrigen Spannung, wie in Fig. 3 gezeigt, im hinteren Teil des Fahrzeugs untergebracht, so kann man die 42V-Verbraucher, die in der Nähe angeordnet sind, von dem Eingang des bidirektionalen Spannungswandlers 93 versorgen. Dies ist in Fig. 4 für die Verbraucher 99 gezeigt. Auch hier kann der Spannungswandler 93 durch den intelligenten Stromverteiler gegen Verpolung am Fremdstartanschluss 100 geschützt sein.

## Patentansprüche

1. Kraftfahrzeug, das mit zwei Bordnetzen unterschiedlicher Spannungshöhe (z.B. 42V/14V) und entsprechend zwei Batterien (1a, 20a) ausgerüstet ist, wobei jedem Bordnetz ein Stromverteiler (1, 20) zugeordnet ist, und wobei den Stromverteilern (1, 20) unterschiedliche Verbraucher ( 5, 8, 27, 28, 33) zugeordnet sind, **dadurch gekennzeichnet, dass** die Stromverteiler (1, 20) intelligente Stromverteiler sind, welche für das jeweilige Netz den Ein- und Ausgangsstrom und den Ladezustand (SOC) beider Netze mittels eines Powermanagements (9) verarbeiten.

2. Kraftfahrzeug nach Anspruch 1, **dadurch gekennzeichnet, dass** auch der Batteriezustand (SOH) beider Netze in die Verarbeitung einbezogen wird.

3. Kraftfahrzeug nach Anspruch 1 oder 2, **dadurch gekennzeichnet, dass** der erste Stromverteiler (1) einen Spannungswandler (10) zur Erzeugung eines Ausgangsstroms mit der niedrigeren Spannung aufweist, der dem zweiten Stromverteiler (20) für die niedrigere Spannung zugeführt wird, wobei das Powermanagement (9) den Ausgangsstrom des Spannungswandlers (10) in Abhängigkeit vom Leistungsbedarf des zweiten Stromverteilers (20) steuert.

4. Kraftfahrzeug nach einem der Ansprüche 1 bis 3, **dadurch gekennzeichnet, dass** die Stromverteiler (1, 20) jeweils in Batterienähe angeordnet, vorzugsweise an der zugehörigen Batterie (1a, 20a) angebaut sind.

5. Kraftfahrzeug nach einem der Ansprüche 1 bis 4, **dadurch gekennzeichnet, dass** in die Verbindungen des ersten Stromverteilers (1) zu seinen Verbrauchern (5) wenigstens teilweise Leistungsstufen (4) eingeschaltet sind.

6. Kraftfahrzeug nach Anspruch 5, **dadurch gekennzeichnet, dass** diese Leistungsstufen (4) steuerbar sind und vom MC (9) angesteuert werden (Verbindungen11).

7. Kraftfahrzeug nach Anspruch 6, **dadurch gekennzeichnet, dass** vor den Leistungsstufen (4) nicht auswechselbare und/oder selbstheilende Sicherungen (6) (Polyswitch) eingebaut sind.

8. Kraftfahrzeug nach einem der Ansprüche 1 bis 7, **dadurch gekennzeichnet, dass** der erste Stromverteiler (1) mit wenigstens einem Verbraucher (8), vorzugsweise einem Steuergerät direkt verbunden ist.

9. Kraftfahrzeug nach einem der Ansprüche 1 bis 8, **dadurch gekennzeichnet, dass** im zweiten Verteiler (20) am Ausgang der Batterie (20a) zusätzlich die Ausgangsspannung, bzw. der Ausgangsstrom gemessen wird, dass auch der zweite Verteiler (20) einen weiteren Microcomputer (23) aufweist, dem die Messergebnisse zugeführt werden und dass der weitere Microcomputer (23) mit dem Microcomputer (9) des ersten Stromverteilers verbunden ist, zwecks Steuerung des Ausgangsstroms des Spannungswandlers (10) des ersten Verteilers (1).

10. Kraftfahrzeug nach Anspruch 9, **dadurch gekennzeichnet, dass** bei Verwendung einer Fremdstarteinrichtung mit der höheren Spannung der zweite Stromverteiler (20) einen Spannungskonverter (34) zur Erzeugung eines Stroms mit der höheren Spannung aufweist, der dem ersten Verteiler (1) über eine Leitung (34a) zugeführt wird.

11. Kraftfahrzeug nach Anspruch 9, **dadurch gekennzeichnet, dass** bei Verwendung eines Schwungradstarters mit der niedrigeren Spannung der zweite Spannungsverteiler (20) einen Spannungskonverter (34) aufweist, dessen Ausgangsstrom bei leerer Batterie (1a) des ersten Stromverteilers (1) zur Motorsteuerung verwendet wird.

12. Kraftfahrzeug nach einem der Ansprüche 9 bis 11, **dadurch gekennzeichnet, dass** der zweite Verteiler (20) Steuergeräte (26a) enthaltende Verbraucherstränge (26) versorgt.

13. Kraftfahrzeug nach einem der Ansprüche 9 bis 12, **dadurch gekennzeichnet, dass** in die zu den Verbrauchern (26a, 28) führenden Leitungen wenigstens teilweise Sicherungen (25), vorzugsweise regenerierbare Sicherungen eingeschaltet sind.

14. Kraftfahrzeug nach einem der Ansprüche 9 bis 13, **dadurch gekennzeichnet, dass** im zweiten Verteiler (40) Verbraucherstränge (43) mit Steuergeräten (47) über Relais (41) ein- und abschaltbar sind.

15. Kraftfahrzeug nach Anspruch 13, **dadurch gekennzeichnet, dass** wenigstens ein Teil dieser Relais bistabile Relais sind, die zur Abschaltung der Ruhestromverbraucher in Abhängigkeit vom Ladezustand der Batterie benutzt werden.

16. Kraftfahrzeug nach einem der Ansprüche 13 oder 15, **dadurch gekennzeichnet, dass** die Strukturierung der einzelnen Verbrauchsstränge (43) die Verbraucherstränge zur getrennten Versorgung der Verbraucher (47) auf der "linken Fahrzeugseite" und/oder auf der "rechten Fahrzeugseite" und/oder im Motorraum und/oder des Motors und Getriebes und/oder im Kofferraum und/oder am Dach und/oder der Sicherungssysteme umfasst.

17. Kraftfahrzeug nach einem der Ansprüche 9 bis 16, **dadurch gekennzeichnet, dass** zwischen den MC (9, 23 oder 52) unter sich und den Steuergeräten (26a, 47) eine Busverbindung zum Informationsaustausch besteht.

18. Kraftfahrzeug nach einem der Ansprüche 9 bis 16, **dadurch gekennzeichnet, dass** der Verteiler (94), welcher den Fremdstartanschluss (100) beinhaltet, einen Verpolschutz aufweist.

19. Kraftfahrzeug nach einem der Ansprüche 9 bis 16, **dadurch gekennzeichnet, dass** der zweite Stromverteiler (20) verpolsicher ausgebildet ist.

20. Kraftfahrzeug nach Anspruch 1 oder 2, **dadurch gekennzeichnet, dass** ein bidirektional ausgelegter Spannungswandler (93) vorgesehen ist, der die Spannungen der beiden Bordnetze jeweils in die Spannung des andern Bordnetzes umsetzt.

21. Kraftfahrzeug nach Anspruch 20, **dadurch gekennzeichnet, dass** dieser Spannungswandler (93) dem Stromverteiler (94) mit der niedrigen Spannung zugeordnet ist.

22. Kraftfahrzeug, nach Anspruch 20, **dadurch gekennzeichnet, dass** Verbraucher (99) für hohe Versorgungsspannung, die in der Nähe des Stromverteilers (94) mit der niedrigen Spannung angeordnet sind, vom Hochspannungseingang des Spannungsumsetzers (93) versorgt werden.

23. Kraftfahrzeug nach einem der Ansprüche 9 bis 22, **dadurch gekennzeichnet, dass** der Spannungsumsetzer (93) gegenüber Verpolung am Fremdstartanschluss (100) durch den intelligenten Spannungsverteiler (94) geschützt ist.

24. Kraftfahrzeug nach einem der Ansprüche 1 bis 22, **dadurch gekennzeichnet, dass** die intelligenten Strom-verteiler (15, 30) durch Strom- und/oder Spannungsmessung von Eingangs- und Ausgangsströmen und Stromregelung mittels Microcomputer MC (9, 23) die Bordnetze auf Funktion und gegebenenfalls Verbrauch überwachen.
